# EUROPEAN PATENT SPECIFICATION

(11) **EP 2 694 948 B1**
(45) Date of publication and mention of the grant of the patent: **10.10.2018**
(21) Application number: 11712884.3
(22) Date of filing: 08.04.2011
(51) Int. Cl.: G01N 21/49, G01N 21/59

(54) **ANALYZER INSTRUMENT AND METHODS FOR OPERATING SAME**
ANALYSEGERÄT UND VERFAHREN ZU SEINEM BETRIEB
INSTRUMENT D'ANALYSEUR ET PROCÉDÉS POUR SON FONCTIONNEMENT

(43) Date of publication of application: 12.02.2014
(73) Proprietor: ABB Research Ltd., 8050 Zürich (CH)
(72) Inventor: KRAMER, Axel, 8057 Zürich (CH); PAUL, Thomas, 8820 Wädenswill (CH); MARET, Yannick, 5405 Dättwil (CH); LOBO, Julio Danin, 5400 Baden (CH)
(74) Representative: ABB Patent Attorneys
(86) International application number: PCT/EP2011/055541
(87) International publication number: WO 2012/136271

(56) References cited:
- US-A- 4 687 327
- US-A1- 2006 000 975
- US-A1- 2008 179 541

## Description

### TECHNICAL FIELD

The present invention relates to an analyzer instrument according to claim 1, and to a method for operating such an analyzer instrument.

### PRIOR ART

The control and optimization of many industrial processes typically involves the online analysis of specific properties of the processed substance, *e.g*. fluids (gasses, liquids), solids, or solid/fluid mixtures. For many applications it is advantageous or even necessary to perform this analysis based on optical measurements (*e.g*. transmission, reflection, scattering of light). Optical measurement has many advantages: It offers non-intrusive in-situ analysis, spectral "fingerprint" analysis, it offers immunity to electromagnetic fields and intrinsic galvanic insulation between the process and the analyzer.

For some industry segments (*e.g.* chemical and petrochemical industries), there are special requirements imposed on the electronics of such a device if operated in a hazardous environment. For example, in order to guarantee safe analyzer operation in explosive environments the housing of the electronics of the device has to satisfy certain standards. The energy required for powering electronic circuits may suffice to ignite an explosive gas. Known are thus optical analyzer devices that are suitable for use in explosive environments by either encasing the instrument in a sealed or purged housing or by the use of optical fibers linking the analyzer electronics to the sensor, such that only the sensor is located in harsh environment.

WO 2009/146710 A1 discloses a pipe system comprising a remote output system and a gas sensing station that includes a photoacoustic spectroscope. For safety reasons the remote system, which is part of the analyzer instrument and is located remotely in non-hazardous atmosphere, and the gas sensing station are linked only optically. The light source for the sensing light of the spectroscope is located in the remote part and its light is fed through an optical fiber from the safe atmosphere to the gas sensing station in the sensing area. The system provides a further light source as part of a transducer that is located in the sensitive area. The light of the latter source is used for conversion of the electrical measurement signal into an optical measurement signal that is transmittable through the previously mentioned optical communication link to distant analyzer electronics.

EP 0 289 200 A2 describes an invention that relates to a device for optical investigations of a fluid medium by means of light. Intrinsic safety is achieved by placing the electronics remotely such that only the sensing part is exposed to explosive or harsh environments. Again, the sensing part is linked to the analyzing electronics by means of optical fibers.

The prior art thus comprises devices that separate the energy-intensive electronic parts, in particular the light source for the light for the measurement, from the explosive gas and consequently also from the analyzer head, while providing for an optical link between the components to guarantee the necessary communication in a safe way. Other devices separate the energy-intensive electronics from the hazardous environment by enclosing the electronics in purged or sealed housings. US 4 687 327 discloses an analyzer according to the preamble of claim 1. These strategies impose a significant extra effort and an additional cost burden on the customer of such devices.

### SUMMARY OF THE INVENTION

It is one of the objects of the present invention to provide an analyzer instrument comprising electronics including a light source for optical measurements, wherein the analyzer instrument is safely operable in a hazardous environment.

This and other objects are achieved by an analyzer instrument having the features of claim 1. Advantageous embodiments are given in the dependent claims, or in the description. Throughout this application terms like "preferable", "preferred", "in particular" or the like denote or relate to embodiments that are optional only.

The present invention specifically provides an analyzer instrument for optically measuring at least one property of a test medium, in particular a fluid, but also any other medium which is analyzable by using a light beam, said analyzer instrument comprising
- at least one light source for the emission of light,
- at least one optional light management unit (emitting light management unit) for guiding light emitted by said light source onto, and/or into and/or through a detection space in said test medium, and/or at least one optional light management unit (receiving light management unit) for receiving at least parts of the light that has interacted with the test medium,
- at least one light detection unit for detecting at least a fraction of said light elastically or inelastically scattered and/or reflected and/or transmitted and /or refracted by the test medium,
- at least one power management unit, and
- at least one data management unit.

Further said analyzer instrument includes and/or is coupled to a power source via a source wiring.

Said power management unit is distributing energy from the power source via a buffer wiring to at least said light source, and via a further wiring to at least said light detection unit and/or to said data management unit.

Further said data management unit is adapted to exchange measurement data measured in said light detection unit via a signal wiring with said light detection unit and directly or indirectly with a receiving unit.

In accordance with the invention, said analyzer instrument is adapted to be operated in a potentially hazardous environment in that at least in the source wiring and/or in said further wiring any current is limited to a current smaller than or equal to 100 milliampere, and any voltage is limited to a voltage smaller than or equal to 30 volt.

The current that the analyzer instrument draws is less than 100 milliampere and the energy it dissipates is less than 50 milliwatt, preferably less than 35 milliwatt, and more preferably less than 25 milliwatt on average. According to the International Standard IEC 60079-11, these values qualify the analyzer instrument as a simple apparatus. However, since the analyzer instrument stores energy amounts of several millijoules, it is not to be considered as a simple apparatus and protective measures have to be taken in order to ensure intrinsic safety of the device. An explosion in a hazardous environment can occur by thermal ignition or by ignition by sparks.

A hot surface exposed to the hazardous environment can cause thermal ignition by spontaneous combustion. This is why every hazardous area has a temperature classification (see Tab. 1 for a listing of the temperature classifications according to International Standard IEC 60079-0). Let's take one example of how temperature classification works. A hazardous area classified as T4 risks explosion if any surface gets hotter than 135°C. Faulty motor windings, for example, can create such a high temperature very quickly. Any piece of equipment used inside this particular hazardous area must not be capable of generating a temperature greater than 135°C. Only equipment rated at T4, T5, or T6 would be allowed in this hazardous area.

The surface temperature of any component in analyzer instrument electronics should preferably be smaller than or equal to a maximum surface temperature (see Table 1).

**Table 1, temperature classification**

| | **T1** | **T2** | **T3** | **T4** | **T5** | **T6** |
|---|---|---|---|---|---|---|
| Maximum Surface Temperature, °C | 450 | 300 | 200 | 135 | 100 | 85 |

As can be seen from Table 1, there are several temperature classes. The maximum surface temperature may vary, depending on the environment, where the electronics is placed, *e.g.* ambient temperature and gas species (see International Standard IEC 60079-0). By keeping the surface temperature below said maximum surface temperature it is ensured that no such surface ignites an explosive gas mixture thermally. Limiting the surface temperature is achieved by having low thermal resistance between electronics and air and by limiting the power and/or by providing corresponding structural cooling and/or dissipation means.

Capacitors store energy in the electrical field between their plates, and this energy can present itself as a spark in the hazardous area. A capacitive circuit supplied by a voltage accumulates energy equal to one-half the capacitance times the square of the voltage. Let us imagine there is a switch connecting the two plates of the capacitor. When the contacts close in a capacitive circuit to discharge a capacitor, a spark can form just before the contacts touch. Because the contacts are almost touching, the size of the spark is small. The switch can also represent field wiring which is accidentally shorted. Thus the maximum capacitance of an intrinsically safe device is limited, depending on the maximum voltage and on the worst-case gas groups (*i.e.* IIA, IIB and IIC as per IEC 60079-0).

The energy stored in the magnetic field of an inductor can be released in the form of a spark in the hazardous area. An inductor *L,* fed by a constant current *I*, stores an energy equal to one-half the inductance times the square of the current. Let us imagine there is a switch that can interrupt the current. When the switch opens, the inductor "tries" to keep current flowing from A to B as it had been before the switch was opened. The voltage which attempts to continue this current flow is determined by the equation *V = L*(*di*/*dt*)*.* The term *"di*/*dt"* is the change in current *di* in the time interval *dt.* This number can be very large, because the current will change from its previous value to zero when the switch is opened. If the inductance is large, then the voltage developed (which is equal to *L*di*/*dt*) is large, and a spark could appear between the two electrodes formed by the switch opening. The switch according to this example can also represent field wiring which is accidentally cut. Thus the maximum inductance of an intrinsically safe device is preferably limited, depending on the maximum current and on the worst-case gas groups (*i.e.* IIA, IIB and IIC as per IEC 60079-0).

The ability to ignite the hazardous atmosphere also depends on the open circuit voltage (V = VOC), and the short circuit current (ISC = V/R). Energy from the power supply could be released in the form of a spark at the point of the circuit opening or shorting. Thus the maximum current and/or voltage in an intrinsically safe device are limited, depending on the worst-case gas groups (*i.e.* IIA, IIB and IIC as per IEC 60079-0).

In order to prevent sparking, the current and voltage values related to the analyzer instrument according to invention are restricted. These restrictions also impose constraints on capacitance and inductance of electronic components, which will be discussed further below. Specifically, this means that in said further wiring (and/or in the source wiring) safe restrictions are imposed on the current, the voltage, and/or the power which under operation can be reached. The primary limit is directed to the maximum temperature the device can have. It also depends on the gas species in the environment of the application and on the surface temperature and/or sparking risk of the electronics. From this application and layout specific voltage and current limits are deduced. This even under conditions, where the housing of the device is not sealing the interior comprising the electronics from the surrounding hazardous environment, so under conditions where the electronics and the wiring can be exposed to the hazardous environment (however a sealing housing is also possible for double protection). Preferably the electronic/electric components of the device are further chosen that also they internally wherever exposed to the environment never reach the maximum limit values of these quantities.

In the interest of safety, it is desirable to meet a standard that limits the energy at disposal of the instrument to a value that any compliant circuit functions properly under normal operating conditions while it is safe even under fault conditions. Intrinsic safety is such a standard. However, this standard of intrinsic safety has so far never been applied to such optical devices. Intrinsic safety has hitherto been a type of protection based on the restriction of electrical energy for electronics, *i.e.* within an apparatus and of interconnecting wiring exposed to a potentially explosive atmosphere, to a level below that which can cause ignition by either sparking or heating effects. The requirements for intrinsically safe systems are defined by "The International Electrotechnical Commission" (IEC) and provided in the IEC publication IEC 60079-25.

In this application, preferably any current *I* is limited to a current (*I*ₘₐₓ) smaller than or equal to 100 milliampere and any voltage *U* is limited to a voltage (*U*ₘₐₓ) smaller than or equal to 30 volt. In the following, several embodiments are discussed.

For example, *I*ₘₐₓ is preferably smaller than or equal to 50 milliampere, more preferably smaller than or equal to 30 milliampere, more preferably smaller than or equal to 25 milliampere, and in particular between 0.01 milliampere and 20 milliampere.

*U*ₘₐₓ is preferably smaller than or equal to 24 volt, preferably smaller than or equal to 24 volt, more preferably smaller than or equal to 15 volt, and in particular between 0.01 volt and 12 volt.

The total dissipated power *P*_{diss} by the analyzer instrument is in average smaller than or equal to 50 milliwatt, preferably smaller than or equal to 35 milliwatt, more preferably smaller than or equal to 25 milliwatt, more preferably smaller than or equal to 20 milliwatt, and in particular between 0.001 milliwatt and 15 milliwatt.

The maximum overall average power consumption *P*ₘₐₓ of the analyzer instrument is preferably smaller than or equal to 200 milliwatt, preferably smaller than or equal to 112.5 milliwatt, more preferably smaller than or equal to 60 milliwatt.

The above stated limits do not necessarily apply for the buffer wiring, but they can also be applied to the buffer wiring.

The maximum capacitance *C*ₘₐₓ and the maximum inductance *L*ₘₐₓ allowed for any electronic component of an intrinsically safe device depend on *I*ₘₐₓ and *U*ₘₐₓ and on the environment (see *e.g.* International Standard IEC 60079-11).

In the case that *I*ₘₐₓ = 100 milliampere, any capacitor of the analyzer instrument that stores momentarily releasable energy in the analyzer instrument according to invention has a capacitance that is smaller than or equal to *C*ₘₐₓ = 80 microfarad, preferably smaller than or equal to *C*ₘₐₓ = 15 microfarad, and more preferably smaller than or equal to *C*ₘₐₓ = 3 microfarad. These values can be chosen in dependence on the environment as per the International Standard IEC 60079-11.

In the case that *U*ₘₐₓ = 15 volt, any inductor that stores momentarily releasable energy in the analyzer instrument according to invention has a inductance that is smaller than or equal to *L*ₘₐₓ = 8 millihenry. These values can be chosen in dependence on the environment as per the International Standard IEC 60079-11.

Should any electronic component exceed these upper limits (T1 to T6, *I*ₘₐₓ, *U*ₘₐₓ, *C*ₘₐₓ, *L*ₘₐₓ), special measures have to be taken to ensure intrinsic safety. Such measures can be:
- encapsulating large valued capacitors (*e.g*. by potting) and limit the energy outflow (*e.g.* by using series resistors or diodes);
- free wheel diodes (for example Zener diodes) that limit the voltage rises (and provide a path for the current);
- limiting the current and/or the voltage that can be delivered to any internal component.

In the context of the present invention, a "property of a test medium" includes a parameter or a property of the test medium that is directly or indirectly accessible to measurement by an optical measurement, *e.g.* a gas concentration, like *e.g.* oxygen or CO₂ concentration, a pH value, a refractive index, a turbidity or particle concentration, like *e.g*. suspended solids, such as crystals, biological cells or ash and dust, or combinations thereof, etc. A property of a test medium further includes a level, a distance, proximity, a position, an object ranging, or similar measurement parameters.

The term "test medium" refers preferably to a gas or gas mixture. Test medium can, however , also include solids (*e.g.* a bulk solid), fluids (*e.g.* a gas or a liquid e.g. of an organic or inorganic chemical, like *e.g.* oil or water, including suspension of particles and/or droplets in gas), or a mixture thereof (*e.g.* a slurry, an emulsion, or a liquid or gas with suspended particles). The test medium can be opaque or transparent. Preferentially, a test medium is substantially fluid, *e.g.* with a particular refractive index, and, in particular, the test medium is a gas or a liquid. Preferentially, the test medium scatters, reflects, and/or transmits light. In particular, the test medium may be a fluid containing particles, *e.g*. suspended solids, such as crystals, biological cells, ash, dust, or other solids or mixtures thereof. The test medium can also contain an interface between two areas with the same or, in particular, different properties, such a property being in particular a refractive index. The test medium can further be an analyte with absorption-related parameters.

The test medium can be in substantially static state, or it can be in a dynamic state, *e.g.* a revolving, flowing or a streaming state. It may be a liquid or a solid that evaporates a gas, or it may be a solid that is partly molten, wherein the molten substance is in a substantially static or a dynamic state.

The term "environment" is to be understood as the volume in which the analyzer instrument is at least partly, preferably completely located and/or which the instrument can affect directly. The environment may be the test medium itself, part of the test medium, or a medium that at least partly includes or is close to or covers/encloses the test medium. In this context the term "close" means that the corresponding distance is comparable to the dimensions of the measurement equipment. In particular, the environment can be a volume that contains a potentially explosive gas that may evaporate from a liquid test medium.

The test medium and the environment can be safe (*e.g.* an inert gas) or hazardous (*e.g.* an inflammable liquid as the test medium and an explosive gas as the environment of said liquid). For example, the test medium can be safe, while the environment is hazardous.

At least one light source may be any light source that can be operated for the measurement with the available power under these limitations, in particular it can be a semiconductor diode laser, preferably a vertical cavity surface emitting laser (VCSEL), preferably with a feed voltage smaller than or equal to 5 volt, preferably 3 volt, in particular between 0.01 volt and 2 volt. In addition such a laser may be characterized by a supply current smaller than or equal to 200 milliampere, preferably smaller than or equal to 100 milliampere, more preferably smaller than or equal to 50 milliampere, most preferably smaller than or equal to 30 milliampere, and in particular between 0.01 milliampere and 0.5 or 30 milliampere.

A VCSEL device produces light in the infrared region (typically between 670 nm and 2000 nm). An example for a VCSEL is a device that is based on an indium phosphide system, with a buried tunnel junction (BTJ) technology. Such a VCSEL has a wavelength typically in the range from 1300 nanometer to 2050 nanometer and is sold by *e.g.* the company VERTILAS GmbH in Garching, Germany. VCSELs allow comparatively high modulation rates up to 10 gigahertz and offer optical power levels higher than 1 milliwatt while the electrical feeding power is of the order of a few milliwatt. Other VCSELs available on the market have a wavelength range with a lower limit of 670 nanometers (*e.g.* from the company Optowell). A typical upper threshold current is below 1.5 milliampere at room temperature (depending on the type of VCSEL), which is very advantageous for low-power application. It is a further advantage of a VCSEL light source that it produces coherent light in a rotational-symmetrical and low divergence optical beam with high efficiency and reliability. VCSELs have an operation temperature range that extends from less than -40 degree Celsius to over +80 degree Celsius. This is advantageous since the industrial market imposes more stringent constraints on analyzer instruments than the environmental monitoring market (*e.g*. water and waste water) does. For example the temperature range of operation of an environmental monitoring device is often 0°C to +50°C. Due to the low operation voltage and current, the VCSEL is thus advantageous for optical low-power devices and in particular for devices that are intended to be operated in hazardous environment and where the light source may be the main load, at least time wise. It is further possible to produce VCSEL arrays, *i.e.* arrays of light sources, in a compact and efficient manner. Such a light source array may be used to measure several properties of a test medium simultaneously. Moreover, the narrow wavelength of the VCSEL can be tuned over a wide range (typically 5 nm) by changing the temperature of the VCSEL chip or the injection current though the chip. Those measurement concepts allow spectroscopic investigation of the medium or gas temperature and/or gas pressure measurements. For the purpose of changing the temperature of the VCSEL chip, an electronic component may be provided, such as a Peltier element, which can cool or heat said chip and which is preferably provided in a hermetically sealed housing with said chip.

A light management unit is optional, *i.e.* it depends on the specific application and use, whether this component is provided. The light management unit is adapted for receiving at least part of the light from the light source and for guiding at least part of it to the detection space. It can further be adapted to receive at least part of the light that has interacted with the test medium in the detection space and to further guide at least part of said interacted light to the light detection unit, if required. The light management unit may contain elements selected from the group consisting of lens systems, splitters, optical filters, dispersive or refractive optics, light guides, optical fibers, light shields, mirrors, etc., as well as combinations thereof. It must be emphasized that the light management unit may be optional, *i.e.* it is conceivable that the light source emits the light directly to the detection space, and at least part of the light that has interacted with the test medium reaches the light detection unit directly.

The term "detection space" has to be understood as the space containing at least a part of the test medium for interaction with light from the light source, wherein said light is subsequently, after having interacted with the test medium, detected by the light detection unit. The actual volume of the detection space may depend on the light, the beam geometry, and also the test medium, or the measurement method.

In the context of the present invention "interacted with the test medium" has to be understood as transmitted, absorbed, reflected, refracted, and/or scattered by the test medium. It is also possible that the light is incident from a medium different from the test medium onto an interface of the test medium, whereupon it is *e.g*. back-reflected into said medium different from the test medium.

The power management unit receives power from the power source via the source wiring. Said source wiring is intrinsically safe, preferably through insulation, and further adapted to exchange data. The power from the power source is preferably electrical power; hence the source wiring, but also the buffer wiring and the further wiring are adapted to conduct electrical power. Generally, the transport of electrical energy entails a loss of energy, which has to be considered. The source wiring as well as the signal wiring can be 2-wire connections adapted for transmittal of both data and energy simultaneously. The data transmitted from the analyzer instrument via the source wiring is received by the receiving unit. Preferably, the receiving unit is a standard device that provides measurement data received via a 2-wire connection for further processing or storing, *e.g*. by a computer. The receiving unit may be integral to the power source or it may be a separate unit. The energy transmittal through the source wiring to the power management unit is preferably achieved with a maximum transmitted voltage of 15 volt and a maximum current of 25 milliampere. Other energy forms are, however, also conceivable, such as *e.g.* light or kinetic energy in form of *e.g.* a flowing fluid or streaming gas, when the corresponding energy conversion means are provided. The energy transfer connections have to then be adapted accordingly. From the power management unit the power for the operation is further distributed at proper voltage and current levels to the different energy-consuming components via the further wiring. Preferably, the power management unit contains a preferably programmable micro-controller (*e.g.* from the MSP430 family) that is adapted to turn on/off different parts of the circuit. Advantageously, said micro-controller is also adapted to receive measured data, *e.g.* a measurement value with a corresponding signal-to-noise ratio, and to control the different parts of the circuit in view of received data. Said further wiring may be adapted to transport data from and to the components, where necessary, and may particularly be a 2-wire connection. It is, however, also possible, to have separate connections for the energy and the data transmission, or, alternatively, to at least partly transmit the data optically, preferably by use of optical links, or even wirelessly by means of known technology.

Under the term "2-wire connection" a connection has to be understood that uses only two wires to transmit both power and data. If more power and/or more data are to be transmitted, a second pair of wires may be used for feeding the instrument. A possible 2-wire solution is the analogue signaling technology known from prior art as 4-20mA.

Devices using this standard are power constrained *per se.*

The power source can be located remotely from the analyzer instrument, preferably outside the hazardous environment, particularly in a safe environment, wherein all other elements of the analyzer instrument may be arranged in a compact manner and preferably on one or several platform boards or platform boards assembly with an optional housing for at least part of the components.

The power source may also be located in the vicinity of the analyzer instrument, in this case preferably on one of said platform boards, *e.g.* in form of a battery or energy harvester means that are adapted to harvest energy from the test medium and/or the environment. However, special care should be taken when the power source is placed in a hazardous environment, *i.e.* compliance with intrinsic safety has to be achieved, *e.g.* by choice of a power source that fulfills respective requirements *per se,* by means of additional components, or by separating the power source and if necessary further elements that may cause harm from the hazardous environment by means of *e.g.* a purged or sealed housing. An analyzer instrument with a mobile source, such as battery or an energy harvester, is particularly advantageous since it allows for construction of a mobile analyzer instrument adapted to analyze a test medium at least temporarily independently from any physical link (*e.g.* an optical or electrical link) for the purpose of energy supply and/or data communication. A low-power device, like *e.g.* the analyzer instrument according to the invention, may be operated by a battery for hours, days, or even months or years, depending on performance and use. Preferably, such a mobile analyzer instrument comprises data storage means and/or a wireless connection to the data receiving unit, or in general, to marshaling cabinets or control cabinets.

The analyzer instrument may comprise an approved intrinsically safe associated apparatus or unit, by means of which *I*ₘₐₓ, *U*ₘₐₓ, and *P*_{diss} are ensured in said wiring. This apparatus is in particular a barrier or interface that guarantees intrinsic safety of the analyzer instrument electronics. The apparatus is preferably located between the source wiring and the power management unit. The barrier defines two sides. The side of the power wiring is referred to as before, the other side as behind the barrier. The approved intrinsically safe associated apparatus may contain current and/or power limiter, diodes, and at least one fuse and may be mounted on one of said platform boards. The apparatus may be an active, or, preferably, a passive device, allowing a safe function of the analyzer instrument under normal conditions. Under fault conditions, however, the approved intrinsically safe associated apparatus protects from harm due to the hazardous environment, *i.e*. it prevents a current and/or voltage and/or energy build-up or release large enough to ignite *e.g.* an explosive gas. In particular, excess current and/or voltage that may be generated in the analyzer instrument under fault conditions are transferable safely to the approved intrinsically safe associated apparatus. Excess current and/or voltage are to be understood as the part of the respective value that exceeds over a corresponding limit. The apparatus *e*.*g*. uncouples the power source from the power management unit in case of power transfer above the limit, thereby avoiding transmittal of harmful amounts of energy to the intrinsically safe device.

In case that the apparatus is located in the hazardous area, it can be installed in an explosion-proof enclosure and/or with explosion-proof seals for connected wires, which are preferably arranged on the enclosure in an intrinsic safety compliant manner. Preferably, the apparatus may be adapted to ensure that in the source wiring and in the further wiring *I*ₘₐₓ is smaller than or equal to 50 milliampere, preferably 25 milliampere, more preferably 20 milliampere and/or wherein the *U*ₘₐₓ is smaller than or equal to 24 volt, preferably 15 volt, and/or wherein the dissipated power *P*_{diss} is smaller than or equal to 20 milliwatt, preferably 15 milliwatt.

The power management unit may comprise a direct current to direct current converter and back-end electronics, wherein the back-end electronics include components *e.g*. for communication reasons, such as a human-machine-interface and a highway addressable remote transducer. The power management unit may further comprise an energy buffer for storing energy. The approved intrinsically safe associated apparatus is preferentially adapted to guarantee intrinsic safety for the amount of stored energy, *i.e.* it is adapted to safely receive and dissipate said energy. Preferably, the energy buffer consists of or includes a current limiter, a capacitive buffer, and a direct current to direct current converter. Said current limiter ensures that a predefined current limit is not exceeded. Through said direct current to direct current converter the energy discharge is managed. Intrinsic safety for the capacitance of the capacitive buffer is ensured as described above.

Preferably, the analyzer instrument is adapted to adjust the energy discharge to the buffer wiring, making an adaptive control of the light source powering possible. The capacitive buffer has a typical capacitance of smaller than or equal to 2 millifarad, preferably smaller than or equal to 1 millifarad, more preferably smaller than or equal to 100 microfarad, and in particular between 0.1 microfarad and 50 microfarad.

Said energy buffer can be adapted to release energy pulsedly via a buffer wiring to the light source, which is operable as a pulsed light source. When the analyzer instrument is measuring in a pulsed mode, there are times, during which the buffer is chargeable and times during which the buffered energy is releasable. Buffer charge times depend on the actual analyzer instrument specifications but are typically smaller than or equal to 200 milliseconds, more preferably smaller than 150 milliseconds, and most preferably smaller than or equal to 100 milliseconds, and in particular between 1 milliseconds and 50 milliseconds. Energy buffer charging currents are typically smaller than or equal to 100 milliampere, preferably smaller than or equal to 50 milliampere, and in particular between 0.1 milliampere and 25 milliampere. The released energy is readily usable for at least one component of the analyzer instrument, preferably for the light source.

It is possible, that the light source is operable primarily by the buffered energy. This is advantageous since the readout electronics require a substantial amount of energy during detection and processing and hence impose a significant load. When the analyzer instrument is operated in pulsed mode, the readout electronics may remain in a low-power standby mode while no light is available and the energy buffer is being charged. This charging process is thus performable with a substantial part from the total power available from the power source. When the buffer is to be discharged, the charging stops and the power that has been used for charging is available to the readout electronics, which is advantageous since they have to become active during the energy release from the buffer and the consequent light emission.

In the context of the present invention it has to be understood that the above stated limits for the source wiring and the further wiring may also apply for the buffer wiring at least during the charging phase of the energy buffer. Typically, a buffer charge time is longer than a discharge time, *i.e.* the length of the following light pulse. It may thus be advantageous to place separate limits for the buffer wiring, particularly during the buffer discharge time. Therefore, the limits for the buffer wiring may be higher than the limits for the source wiring and the further wiring. It is, however, for most applications important, that the requirements for intrinsic safety are complied with at any point in time, *i.e.* the current in the buffer wiring is to be related to the applied approved intrinsically safe associated apparatus, which has to be chosen accordingly, wherein a discharge current is typically smaller than or equal to 250 milliampere, preferably smaller than or equal to 150 milliampere, more preferably smaller than or equal to 100 milliampere, and in particular between 0.01 milliampere and 50 milliampere, and the corresponding voltage is smaller than or equal to 15 volt, preferably smaller than or equal to 10 volt, more preferably smaller than or equal to 5 volt, and in particular between 0.01 volt and 3 volt. These limits may be higher, when additional protection means are provided, *e.g*. insulation or separation of the buffer wiring and the thereto connected components, such that the requirements of intrinsic safety are fulfilled in spite of higher values.

The light pulses are preferably of a length smaller than or equal to 50 milliseconds, more preferably smaller than 10 milliseconds, and most preferably smaller than or equal to 5 milliseconds, and in particular between 1 nanosecond and 1.5 milliseconds.

The light detection unit may be a photo detector as known in the field. Said light detection unit is preferably adapted to measure stationary or time varying light intensity and/or frequency and/or pulse duration and particularly to provide a first signal based on an incident light pulse of a predefined length. This first signal is transferable via the further wiring and managed by the data management unit. The management unit may also be integrated into the detection unit. The data management unit is adapted to receive signals and to manage received information in exchange with at least the receiving unit, and preferably also with the power management unit, preferably by means of source wiring and/or further wiring, or alternatively by additional wiring and/or wireless means.

Preferably, the analyzer instrument comprises an analyzer unit that is adapted to analyze said first signal, *i.e.* it is adapted to process said first signal and to produce a second signal, *i.e.* a measurement value, with a corresponding signal-to-noise-ratio. Such analyzers are as such known from prior art. They may contain an analogue to digital converter (e.g. of the type LTC1865L ADC). The light detection unit and the analyzer unit may also be a single unit, *e.g.* a readout unit. The signal provided by the analyzer unit may be available to the data receiving unit and advantageously also to the power management unit via the data management unit, particularly to a micro-controller. The signal-to-noise ratio may be different for different measurement regimes, *e.g*. for different test medium conditions or for different light intensities. For low light intensity the performance (*i.e*. accuracy and detection limit) is typically worse than for operation regimes where the light intensity is high.

The analyzer instrument may thus advantageously be adapted to adjust the light pulse length, *i.e.* the electronics, *e.g.* the power management unit with the micro-controller, shortens or lengthens the pulse length as a function of said signal-to-noise ratio in view of a target signal-to-noise ratio (*e.g*. larger than or equal to 3:1, preferably 10:1, in particular between 50:1 and 200:1 depending on the measured property) and/or a target accuracy (e.g. smaller than or equal to 10 %, preferably 5%, in particular between 0.01% and 2% depending on the measured property) and/or a target time resolution (*e.g*. larger than or equal to 1/second, preferably 5/second, in particular between 7.5/second and 15/second depending on the measured property). With a longer light pulse, more data is collectable per light pulse due to the longer exposure time and the corresponding signal-to-noise ratio improves. It is to emphasize, however, that longer light pulses require the energy buffer to store larger amounts of energy, which may be problematic *e.g*. when the analyzer instrument is to be operated in harsh environment.

The analyzer instrument may further be adapted to average over the first and/or second signals due to subsequent incident light pulses of the pulsed light source. The averaging may be processed, preferably, by the analyzer unit or, alternatively, by the light detection unit directly. This process yields an averaged signal. The analyzer unit may further determine a signal-to-noise ratio of the averaged signal. If the averaging window is long, the response time of the analyzer is degraded. In order to achieve a decent update rate of the measurement value, the averaging window has to be adapted according to the actual value and its rate of change. The analyzer instrument according to the invention is preferably adapted to adjust a number of light pulses used to compute the averaged signal, *i.e.* the averaging window, as a function of said signal-to-noise ratio of averaged signal in view of a target signal-to-noise ratio of the averaged signal and/or a target accuracy and/or a target time resolution of a measurement of a physical parameter of the test medium addressed by the analyzer instrument. The operation mode using short light pulses and averaging of data collected during the short light pulses is advantageous over collecting data with fewer but longer light pulses, since the required capacity of the energy buffer for the operation of the light source is lower with short light pulses.

The analyzer instrument allows measuring at least one of the properties of the test medium. It can, however, also be adapted to measure several such properties simultaneously or consecutively. Preferably, the analyzer instrument is constructed such that at least parts of its components may easily be exchanged in order to measure further properties. Such further properties may be a gas concentration, like *e.g*. oxygen or CO₂ concentration, a pH value, a refractive index, a turbidity or a particle concentration, like *e.g*. suspended solids, such as crystals, biological cells or ash and dust, etc. Such a property of a test medium can further be a level, a distance, proximity, a position, object ranging, or similar measurements property like *e.g*. humidity, dewpoint, pressure, topography, or temperature. The light management unit may comprise at least one light guiding means. If so, said at least one light guiding means is advantageously protected from movements in order to reduce movement-induced noise. Preferable protection means are rigid housings that fix or enclose at least one light guiding means at least partially. In order to minimize the effort, and consequently costs, the light source is advantageously located in the vicinity of the detection space.

In a second aspect, the present invention provides a method for measuring at least one property of the test medium by means of the analyzer instrument according to invention for a situation when the analyzer instrument is located in the hazardous environment. Of course, measurements are also possible in safe environments. The analyzer instrument can be located in the vicinity of the test medium, at least partially, or completely in the test medium. The actual location of the analyzer instrument may depend on *e.g.* the place conditions, the test medium, the environment, the measurement method, or the measured property. The analyzer is operated such that the light source emits light. Said light may be directed or guided to the detection space, *e.g.* by means of a light guiding means, such as a lens system or optical waveguide, or mirror/splitter systems, where it interacts with the test medium. Interacting means that it travels through the test medium while it is *e.g*. scattered and/or transmitted or partially absorbed. Interacting may also comprise the case when light does not enter the test medium, but is reflected at an interface of the test medium and an environment, *e.g*. due to an abrupt change of the refractive index at the interface. At least a part of said light that has interacted with the test medium reaches the light detection unit either directly or is guided, *e.g.* by means of a light guide or a mirror, and subsequently detectable. Depending on the measurement property a stationary and/or a time varying light intensity is evaluated.

In a method according to the invention the light source may be operated in pulsed mode, a continuous light emission may, however, also be possible, depending on the actual measurement.

According to the method of invention the analyzer instrument according to invention may also average over measurement results due to single light pulses and/or adjust a light pulse length in dependence of a predefined measurement requirement, such as a target signal-to-noise ratio, a target accuracy, or a target time resolution.

The analyzer instrument is particularly advantageous when used for measuring at least one property of test medium in a potentially hazardous environment due to its comparably low price, due to its high energy efficiency, and due to its compliance with intrinsic safety.

In the following important elements of the invention shall be summarized, wherein these elements can be taken alone or in any possible combination as preferred embodiments:
***Low-power architecture:*** Realize intrinsic safety of an optical analyzer platform by using energy limited sources, such as battery or power limited sources, such as energy harvesting or low-power 2-wire transmitter architecture. In this latter approach the power for all analyzer components is delivered by the 2-wire loop (available power typically: P=9 volt 3.5 milliampere = 31.5 milliwatt).

***Laser light source:*** The analyzer instrument preferably uses a new light source which is based on stimulated emission (laser). Vertical-cavity emitting lasers (VCSEL) are even suited since they consume a factor of 10 less electrical power as compared *e.g.* with LEDs. Since the light source is normally the main load, it should be operated intermittently. The energy for the light pulses can be accumulated in a charging buffer. The repetition rate of light pulses can limit the best achievable response time and through the signal-to-noise ratio also the accuracy. Since the signal-to-noise ratio is dependent on the working regime of the sensor (low light intensity versus high light intensity) an adaptive signal processing control is proposed.

***Adaptive control:*** It is proposed to use the information from the sensor reading to adjust the averaging window of the data analysis depending on the measurement regime of the sensor, *i.e*. depending on a low/medium/high signal: A first idea is to average the measurement points over several pulses in case of insufficient signal-to-noise ratio. A second idea is to adjust the pulse length of the laser light and the connected measurement window. These adaptive methods allow for achieving an optimal sensor performance with respect to accuracy and resolution. Furthermore, the control can be adapted to the signal dynamics. If the analyzer detects a large rate of change in the measured light intensity, it adapts the number of pulses used to compute the average (resp. the length of the averaging window). This enables the analyzer to quickly give a response to abrupt changes of the fluid parameter, albeit with a reduced accuracy, while achieving a high accuracy on steady-state measurements.

***Platform concept:*** It is further proposed to apply the optical analyzer as a platform device which can address more than one fluid parameter. The optical interrogation then determines fluid properties such as turbidity, suspended solids, refractive index, dissolved oxygen, chlorine, pH, CO₂ etc. Various embodiments for signal evaluation are foreseen, *e.g.,* in which either stationary or time varying light intensity is evaluated. The latter is *e.g.* important for fluorescence decay measurements after an excitation pulse.

***Architectural setup:*** The transmitter electronics is arranged in a way that all optical light guiding means (e.g. lens systems, optical waveguides) are protected by housings and thus cannot be moved. Thus, error readings due to signal variations which are caused by a change in an open optical link (*e.g.* fiber bending, connector geometry) are avoided. A usual precondition for this is to be able to arrange the transmitter directly in the vicinity of the analyzer head in the explosive atmosphere and this is only possible, in a cost-effective manner, when the realization is compliant with intrinsic safety. Furthermore, a low-power local analyzer enables the realization of a battery-powered or energy-harvester-powered instrument with wireless connection to marshaling cabinets or control cabinets. In other words, any kind of physical link (be it optical or electrical) is avoided.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. An identical reference sign refers to the same feature. In the drawings,
- Fig. 1: shows an analyzer instrument according to a first embodiment of the present invention;
- Fig. 2: shows an analyzer instrument according to a second embodiment of the present invention; and
- Fig. 3: shows three different measurement setups using an analyzer instrument according to invention.

### DESCRIPTION OF PREFERRED EMBODIMENTS

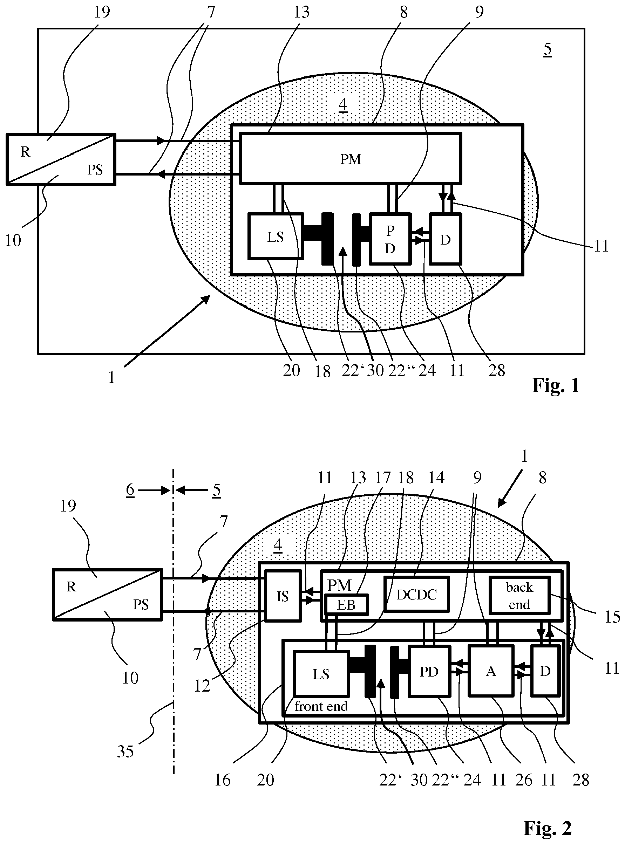

Figure 1 illustrates a first embodiment of an analyzer instrument. The analyzer instrument 1 comprises a platform board 8, which provides a light source 20, a light detection unit 24, a data management unit 28, a power management unit 13, and connections 7, 9, 11, 18. The power management unit 13 is coupled to both a power source 10 and a receiving unit 19 by means of a source wiring 7. The power management unit 13 is connected to the light source 20 via a buffer wiring 18, and to the light detection unit 24 and the data management unit 28 via further wiring 9, 11. Wiring 11, the signal wiring, also connects the light detection unit 24 and the data management unit 28. Furthermore, there is a light management unit 22 attached to the light source 20.

Said light management unit 22 comprises a first light guiding means that is adapted to receive light from the light source 20 and to guide at least part of it to a detection space 30. Preferably, any light guiding means comprised in the analyzer instrument is enclosed in a rigid housing in order to avoid movement-induced noise. In order to reduce noise and to save effort and related costs, the light source 20 and the light detection unit 24 are in the vicinity of the detection space 30, *i.e.* the length of any light guiding means is preferably minimized, most preferably there are no light guiding means. The light management unit 22 is adapted to emit at least part of the light that subsequently enters the detection space 30 on a first side. The light detection unit 24 is located at a second side of the detection space 30, opposite to said first side, and is adapted to directly receive the light that has passed through detection space 30, thereby avoiding additional light management components.

During a measurement, the platform board 8 is located *e.g.* in a hazardous environment 5, at least partly in a test medium 4, in such a way that particularly the detection space 30 is within the test medium 4. The power source 10 is located remotely from the platform board 8, in this case outside the test medium 4. The power source 10 comprises here the receiving unit 19 and transmits power, compliant with the above stated limits, to the power management unit 13 via source wiring 7. From the power management unit 13, the received power is distributable to the light source 20 by means of the buffer wiring 18, to the light detection unit 24, and to the data management unit 28 by means of the further wiring 9, 11.

The light source 20 is a low-power and highly efficient vertical cavity emitting laser, as described above. It is adapted to produce light, part of which is guided to the detection space 30 in the above described manner; at least part of said light subsequently travels through the detection space 30 while it interacts with the test medium 4. The light detection unit 24 is adapted to receive at least part of said light. The light detection unit 24 is adapted to detect at least part of the incident light and to produce and provide a first signal, which is a processed signal, an analogue or preferably already a digital signal. The data management unit 28 is adapted to receive said first signal via the signal wiring 11. Preferably, the signal wiring 11, as well as the source wiring 7 are 2-wire connections as described above. The data management unit 28 is adapted to acquire said signals, preferably to store them, and particularly to transmit them to the data receiving unit by means of the signal wiring 11 and the source wiring 7 via the power management unit 13.

Another example of an analyzer instrument 1 is illustrated in Fig. 2. Basically, this example provides the analyzer instrument 1 with the same parts as the previously mentioned embodiment that is depicted in Fig. 1, identical reference numerals indicating equivalent parts, with some additional components and functions. It additionally comprises an approved intrinsically safe associated apparatus 12 and an analyzer unit 26 on the platform board 8, wherein the power management unit 13 contains further an energy buffer 17, a direct current to direct current converter 14, and back-end electronics 15. The back-end electronics 15 provides a human machine interface and a highway addressable remote transducer for communication reasons. The light source 20 including the light management unit 22, the light detection unit 24, the analyzer unit 26, and the data management unit 28 are provided here by front-end electronics 16.

The platform board 8 is located in the hazardous environment 5, while the power source 10 including the receiving unit 19 are located in a safe environment 6, wherein there is an interface 35 between said environments. The interface 35 may also be an interface region. The power wiring 7 is crossing the interface 35 and is connected to the approved intrinsically safe associated apparatus 12.

Apparatus 12, as described above, has the function of a barrier that guarantees intrinsic safety. Under normal conditions, it is adapted to limit current and voltage transmitted from the power source 10 to values as stated above and to decouple the power source 10, if the transferred power does not comply with said limits. Thereby it ensures the above stated limits for the further wiring 9, 11 of the analyzer instrument 1. Particularly, any excess current or voltage that occurs under fault conditions behind the barrier, *i.e.* on the platform board 8, is safely transferable to the apparatus 12. Importantly, the source wiring 7 before the barrier is intrinsically safe, preferably through insulation, and connected to the apparatus 12 by means of explosion proof seals that guarantee compliance with intrinsic safety. Preferably, also the wiring attached to the barrier from the side after the barrier is connected with such seals.

The direct current to direct current converter 14 belongs to the power management unit 13 and is adapted to distribute the power received from the power source to the back-end electronics 15 and front-end electronics 16. Typically, it is adapted to provide about 40 % or less of the available power to the back-end electronics 15 and the rest to the front-end electronics 16 and/or the energy buffer 17.

The energy buffer 17 is supplied by power source 10 through the power management unit 13 and via the further wiring 9, 11 and adapted to transfer the buffered energy via the buffer wiring 18 to the light source 20. Through the energy buffer 17 the light source 20 is particularly operable in a pulsed mode. The apparatus 12 is adapted to ensure intrinsic safety for the buffer wiring, *i.e*. excess energy is safely transferable to it, as described above. The light emitted during a light pulse is at least partly guided by the light management unit 22 to the detection space 30, interacts at least partly with the test medium 4 in the detection space 30. The light detection unit 24 is adapted to at least partly detect said light and to provide a first signal that is transferable to the analyzer unit 26 via the signal wiring 11.

The analyzer unit 26 is located between the light detection unit 24 and the data management unit 28. It is connected to the light detection unit 24 and the data management unit 28 by means of signal wiring 11. There is a further connection to the power management unit 13 via the wiring 9, through which the analyzer unit 26 is powered. Alternatively, it may also be powered via signal wiring 11. The analyzer unit 26 is adapted to produce a second signal from said first signal and a corresponding signal-to-noise ratio.

The analyzer instrument 1 is adapted to adjust a length of a light pulse emitted by the pulsed light source 20. The pulse length is adjustable via the power management unit 13, preferably via a programmable micro-controller that is adapted to receive the second signal and the corresponding signal-to-noise ratio. The length is adjustable particularly as a function of said signal-to-noise ratio in view of a target signal-to-noise ratio and/or a target accuracy and/or a target time resolution of measurement of a physical parameter of the test medium 4. The analyzer instrument 1 is further adapted to average over the second signals due to subsequent incident light pulses of the pulsed light source 20. The averaging is preferably processed by the analyzer unit 26 that is adapted to provide an averaged signal including a signal-to-noise ratio of the averaged signal. Alternatively, the analyzer instrument may be adapted to average over the first signals. Advantageously, the analyzer instrument 1 may be further adapted to adjust a number of light pulses used to compute the averaged signal as a function of said signal-to-noise ratio of the averaged signal in view of a target signal-to-noise ratio and/or a target accuracy and/or a target time resolution of measurement of a physical parameter of the test medium 4 addressed by the analyzer instrument 1.

Several variations of analyzer instrument design are possible, *e.g.* the light detection unit 24 may be located at another, *e.g.* the same first side of the detection space 30. In general, the different components of the analyzer instrument 1 shall be chosen according to requirements. Also the design is to be adapted to the purpose of the analyzer instrument 1, *e.g.* the mutual position of the light source 20 and the detection unit 24 may be adjusted depending on given requirements, such as space conditions or measurement property of the test medium 4.

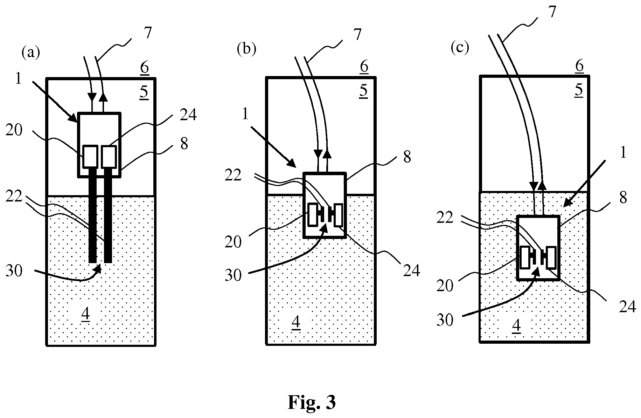

Figure 3 shows different possibilities how the analyzer instrument 1 may be located with respect to the test medium 4. In Fig. 3a only the light management unit 22 is in the test medium 4, while the platform board 8 is located in the hazardous environment 5. Said unit 22 comprises two components, preferably light guiding means that are adjusted to guide at least part of the light from the light source 20 to the detection space 30 and from the detection space 30 to the light detection unit 24. In Fig. 3b the analyzer instrument 1 is partially surrounded by the test medium 4, wherein the analyzer instrument is completely in the test medium 4 in Fig. 3c.

In a preferred method for measuring at least one property of the test medium 4 the analyzer instrument 1 is placed in the hazardous environment 5 with a predefined location with respect to test medium 4, see Fig. 3. The analyzer instrument 1 is preferably intrinsically safely coupled to power source 10, which includes the receiving unit 19, via the insulated source wiring 7, thereby establishing a power and communication link to the platform board 8. The power management unit 13 receives power from the power source 10, preferably in an intrinsically safe manner. Said power is distributed to the light source 20 via the buffer wiring 18 and to the other energy-consuming components via the further wiring 9, 11. The powered light source 20 emits light. At least part of said light is receivable by the light management unit 22, preferably through a light guide, and subsequently guidable to the detection space 30, which is in the test medium 4. The light then interacts with the test medium 4. This interaction is specific and allows for drawing conclusions about at least one property of the test medium 4, and the analyzer design is adapted according to requirements defined by *e.g.* the investigated property, the test medium 4, and/or the place and operation conditions. At least part of the light that has interacted with the test medium 4 is then received by the light detection unit 24, preferably without further employing the light management unit 22. The light detection unit 24 produces a first signal. Said first signal is transferred to the data management unit 28 by means of signal wiring 11. The data management unit 28 receives said signal, preferably stores it, and exchanges the data with the receiving unit via signal wiring 11 and source wiring 7.

In a further preferred method according to the present invention an analyzer instrument according to invention is employed, wherein the power from the power source 10 is transferred by the power management unit 13 to the light source 20 via the energy buffer 17, wherein said energy buffer 17 is continuously charged via the further wiring 9, 11 with power from the power management unit 13 and discharged via the buffer wiring 18. The discharge energy is released to the light source 20 in a pulsed manner. The light source 20 is thus operated such that it emits light pulses. The light path is as described above. The light detection unit 24 is adapted to detect light from subsequent light pulses and to produce and provide the subsequent first signals. The data management unit 24 receives said first signals and exchanges it with the receiving unit 19.

Preferably, the analyzer instrument 1 comprises an analyzer unit 26 that receives the first signals and produces and provides the second signals with the corresponding signal-to-noise ratios. The analyzer unit 26 preferably also computes average signals from said first and/or second signals including the signal-to-noise ratio of the averaged signal. The signals provided by the analyzer unit 26 are exchanged with the receiving unit 19 by means of the data management unit 28 via signal wiring 11 and source wiring 7. The data management system may also provide signals and signal-to-noise ratios to the power management unit, particularly to the micro-controller, which uses the receive information for adaptive control of the analyzer instrument 1. The analyzer instrument 1 preferably adapts the pulse length of the light pulse and/or the number of signals from which the average signal is computed as a function of said signal-to-noise ratio of the averaged signal in view of a target signal-to-noise ratio and/or a target accuracy and/or a target time resolution of measurement of a physical parameter of the test medium 4 addressed by the analyzer instrument 1. It is also conceivable that the light intensity or the beam geometry is adapted by suitable means, as known from prior art.

The analyzer instrument of the present invention may be used for measuring at least one property of test medium 4 in a potentially hazardous environment 5 by means of the following measurement methods. It has to be understood that the methods discussed below are only examples of a large variety of experimental analyses, which are possible using a low-power high efficiency light source equipped analyzer instrument complying with intrinsic safety.

### Property: Gas concentration, e.g. oxygen:

### Method 1: Luminescence characteristics of excited chemical complex (intensity, decay, phase delay)

Oxygen sensors based on optical measurement principles use the effect of dynamic fluorescence quenching. Typically a specially designed chemical complex, distributed in a thin oxygen permeable matrix (such as polymer, sol-gel material or silica gel), is excited by light of appropriate wavelength range and emits a red-shifted luminescence light. The presence of oxygen in the vicinity of the complex leads to a change of the emission characteristics due to non-radiative energy transfer by collisions with oxygen molecules (luminescence quenching). Beside oxygen also other molecules can be detected using this method, e.g., CO₂ and pH (see www.polestartech.com).

The analysis of the luminescence light can be done in three different ways: i) measurement of the luminescence intensity in a specific spectral range, ii) measurement of the phase delay with respect to the sinusoidally modulated excitation light, iii) measurement of the lifetime of the luminescence decay when pulsed excitation is used. The two latter concepts are favorable due to their immunity to measurement artifacts from light source aging or transmission changes in the optical link. Concept (iii) is especially favorable regarding this invention, since it complies well with low-power pulse mode operation of the excitation light source. Using these concepts the absolute concentration of oxygen in the medium can be determined.

### Method 2: Tunable diode laser absorption spectroscopy (TDLAS)

An experimental setup for TDLAS requires a scanning laser diode, some transmission optics, a container for the investigated medium containing the analyte, receiving optics and a detection unit. The basic idea is to tune the laser frequency (temperature or current tuning) over a spectral range of characteristic absorption line(s) of the analyte. This leads to a decrease of signal intensity in the detection path, which can be detected by a photodiode and which is used to determine the analyte concentration (Lambert-Beer law) or other absorption-related parameters (*e.g*. gas temperature, gas flow velocity). In order to increase signal-to-noise ratio often modulation techniques are applied. Also pulse-mode wavelength scanning schemes are conceivable for compliance with low power requirements.

### Property: Turbidity or particle concentration, e.g. suspended solids, such as crystals, biological cells or ash and dust, etc.:

### Method 1: Light scattering off particles using propagating waves

The turbidity of a sample can be measured by analyzing the diffusely scattered light from particles present in the sample medium (gas, liquid, or solid). In a typical experimental configuration light of a specific spectral range is shone through a window onto the particles in the sample and the light intensity of the scattered light is measured. One or more detection channels can be applied either for the analysis under different angles (forward, backward, side scattering) or for the analysis in different spectral ranges or for both. Normally the light source is modulated (*e.g*. sinusoidally or in a pulsed way), in order to enhance signal-to-noise ratio and to permit for immunity against stray light from other sources. The pulse mode operation is especially favorable with respect to this invention, since it meets the requirements of an intrinsically safe low-power electronics platform including light source.

### Method 2: Light scattering off particles using evanescent waves

See below "Refractive Index".

### Parameter "Level, Distance, Proximity, Position, Object Ranging etc.":

### Method: Reflection, e.g., Time-of-flight measurement of reflected light pulses

Designed for bulk solids, slurries, and opaque liquids, laser ranging can be used to measure the position of a reflective surface, *i.e.,* filling level of a vessel. The principle is very similar to that of ultrasonic level sensors. Instead of using the speed of sound to find the level, however, the speed of light is used. A laser transmitter at the top of a vessel fires a short pulse of light down to the process liquid surface, which reflects it back to the detector. A timing circuit measures the elapsed time (time-of-flight) and calculates the distance. The key is that lasers have virtually no divergence and no false echoes. Since this measurement technique relies on pulsed operation, it is particularly well-suited for low-power operation.

### Parameter "Refractive Index":

### Method: Detection of angle of total internal reflection of divergent light beam

The refractive index of a process fluid can be measured by determining the critical angle at which a light beam undergoes total internal reflection at an interface. This can be accomplished by using a diverging light beam (*e.g*. as emitted from an illuminated optical fiber) and a prism, one surface of which is in contact with the process medium of interest. Two opposite surfaces of the prism act as mirrors bending the light rays such that the diverging rays meet the interface at different angles. The rays that are subject to total internal reflection are reflected again internally to produce an image on a position-sensitive detector (*e.g.* a CCD chip). The position of the shadow edge is a function of the difference in refractive index between the prism and the process medium. This scheme lends itself to pulsed operation, the accuracy being limited by the spatial resolution of the chip.

### Property "Concentration":

### Method: Attenuated total internal reflection - light scattering /absorption using evanescent waves

Upon total internal reflection of a light ray (typically IR) at an interface between an optical medium (*e.g*. a window) and a process medium of lower refractive index, an evanescent wave forms that extends into the process medium (typically between 0.5 and 2 micrometer). The reflected light intensity depends on the attenuation of the evanescent wave specific to the medium. This effect can be amplified by using multiple internal reflections. The attenuation of the beam is a direct measure of the concentration of a component of the process medium absorbing or scattering at the chosen wavelength. By modulating the light source, the change in intensity can be measured with a high signal-to-noise ratio. In addition, a second light source emitting in a spectral range in which the component of the medium does not absorb, can be used as a reference.

### Method: Raman scattering

Raman spectroscopy is a powerful tool for classifying unknown chemicals by their vibrational spectra. Laser light in the visible or near infrared parts of the spectrum is directed into the sample and the scattered light is detected in an optical arrangement similar to that used for turbidity measurements. Raman spectroscopy can be used to detect a wide variety of organic and inorganic chemicals. The frequency-shifted, scattered laser light is collected, transmitted via fiber optic cable, and filtered to separate Rayleigh- from the Stokes-scattering associated with the sample component of interest. The intensity of the Stokes signal is proportional to that component's concentration in the sample. As Raman scattering is a process of low efficiency, pulsed operation with higher peak powers or multi-pass optical layouts are preferred. The advantage of Raman over IR spectroscopy is that bands are sharper and there is no interference with water or CO₂ absorptions.

An analyzer instrument according to the present invention, *i.e*. an instrument that cannot, even under severe fault conditions, generate a heat discharge with sufficient energy to ignite the explosive gas, is consequently advantageous in that it allows for a compactly constructed device for analyzing a test medium in a potentially hazardous environment. Importantly, there is no need to place energy-intensive electronics remotely while establishing additional physical links or to provide for sealed or purged housings that shield potentially igniting sparks or hot spots from the explosive medium. The additional and costly commissioning required for the previously mentioned measures are thus not required. A further advantage of the analyzer instrument according to invention is that, by default, the power consumption is low, which is favorable for an instrument design relying on a mobile power source intended for time-wise self-sustaining operation.

**LIST OF REFERENCE SIGNS**

| | | |
|---|---|---|
| 1 | Analyzer instrument | 19 Receiving unit |
| 4 | Test medium | 20 Light source |
| 5 | Hazardous environment | 22 Light management unit |
| 6 | Safe environment | 22' emitting light management unit |
| 7 | Source wiring | 22" receiving light management unit |
| 8 | Platform board(s) assembly | 24 Light detection unit |
| 9 | Wiring | 26 Analyzer unit |
| 10 | Power source | 28 Data management unit |
| 11 | Signal wiring | 30 Detection space |
| 12 | Approved intrinsically safe associated apparatus | *C*ₘₐₓ Maximum capacitance |
| | | *L*ₘₐₓ Maximum inductance |
| 13 | Power management unit | *I*ₘₐₓ Maximum current |
| 14 | Direct current-direct current converter | *U*ₘₐₓ Maximum voltage |
| 15 | Back-end electronics | *P*ₘₐₓ Maximum power |
| 16 | Front-end electronics | *P*_{diss} Dissipated power |
| 17 | Energy buffer | |
| 18 | Buffer wiring | |

## Claims

1. Analyzer instrument (1) for optically measuring at least one property of a test medium (4), in particular a fluid (4), said analyzer instrument (1) comprising
- at least one light source (20) for the emission of light,
- optionally at least one light management unit (22) for guiding light emitted by said light source (20) onto and/or into and through a detection space (30) in said test medium (4), and/or optionally at least one light management unit (22) for receiving at least a fraction of the light that has interacted with the test medium,
- at least one light detection unit (24) for detecting at least a fraction of said light elastically and/or inelastically scattered and/or reflected and/or transmitted and/or refracted by the test medium (4),
- at least one power management unit (13), and
- at least one data management unit (28),
wherein said analyzer instrument (1) further includes and/or is coupled to a power source (10) via a source wiring (7),
wherein said power management unit (13) is distributing energy from the power source (10) via a buffer wiring (18) to at least said light source (20), and via a further wiring (9, 11) to at least said light detection unit (24) and/or to said data management unit (28),
wherein said data management unit (28) is adapted to exchange measurement data via a signal wiring (11) with said light detection unit (24) and directly or indirectly with a receiving unit (19), wherein said analyzer instrument (1) is adapted to be operated in a potentially hazardous environment (5) wherein at least in the source wiring (7) and/or in said further wiring (9, 11) any current *I* in the analyzer instrument (1) is limited to a maximum current (*I*ₘₐₓ) smaller than or equal to 100 milliampere, **characterized in that** any voltage *U* in the analyzer instrument (1) is limited to a maximum voltage (*U*ₘₐₓ) smaller than or equal to 30 volt, and said analyzer instrument (1) further comprises an approved intrinsically safe associated apparatus (12), by means of which the maximum current (*I*ₘₐₓ) and the maximum voltage (*U*ₘₐₓ) are ensured, wherein the power management unit (13) comprises or is coupled to an energy buffer (17) for storing energy, wherein the stored energy is pulsedly released to the light source (20) via the buffer wiring (18), and wherein the light source (20) is operated as a pulsed light source (20).

2. Analyzer instrument (1) according to claim 1, **characterized in that** the approved intrinsically safe associated apparatus (12) is located between the source wiring (7) and the power management unit (13), and/or wherein the maximum current (*I*ₘₐₓ) is smaller than or equal to 25 milliampere, preferably smaller than or equal to 20 milliampere, and/or wherein the maximum voltage (*U*ₘₐₓ) is smaller than or equal to 20 volt, preferably smaller than or equal to 15 volt, and/or wherein the maximum dissipated power (*P*_{diss}) is smaller than or equal to 20 milliwatt, preferably smaller than or equal to 15 milliwatt.

3. Analyzer instrument (1) according to any one of the preceding claims, **characterized in that** the analyzer instrument (1) is a mobile analyzer instrument.

4. Analyzer instrument (1) according to any one of the preceding claims, wherein maximum dissipated power (*P*_{diss}) in the analyzer instrument (1) is smaller than or equal to 50 milliwatt, preferably 35 milliwatt, and more preferably 25 milliwatt.

5. Analyzer instrument (1) according to any one of the preceding claims, wherein the light source (20) is a semiconductor laser, preferably with a feed voltage smaller than or equal to 5 volt, preferably smaller than or equal to 3 volt, and/or with a supply current smaller than or equal to 200 milliampere, preferably smaller than or equal to 50 milliampere.

6. Analyzer instrument (1) according to claim 5, wherein the semiconductor laser is a vertical cavity surface emitting laser.

7. Analyzer instrument (1) according to any one of the preceding claims, **characterized in that** the power source (10) is not located in the analyzer instrument (1) and is located outside of the hazardous environment (5).

8. Analyzer instrument (1) according to claim 7, **characterized in that** all elements except the power source (10) are located on a single-platform board assembly (8) or single-platform boards assembly (8), preferably in a housing, wherein further the power source (10) is connected to the power management unit (13) via the source wiring (7), and the source wiring (7) is adapted to exchange data and energy, wherein preferably the source wiring (7) is intrinsically safe, for example through insulation.

9. Analyzer instrument (1) according to any one of the preceding claims, **characterized in that** the source wiring (7) and/or the further wiring (9, 11) and/or the buffer wiring (18) is or are a 2-wire connection adapted for transmittal of data and energy, preferably with a maximum transmitted voltage of 24 volt and a maximum current of 50 milliampere, more preferred with a maximum transmitted voltage of 15 volt and a maximum current of 25 milliampere.

10. Analyzer instrument (1) according to any one of the preceding claims, wherein the buffer wiring (18) and thereto connected components are insulated, such that requirements of intrinsic safety are fulfilled in spite of values higher than said maximum voltage (*U*ₘₐₓ) and/or said maximum current (*I*ₘₐₓ).

11. Analyzer instrument (1) according to any one of the preceding claims, **characterized in that** it is built such that any surface of the analyzer instrument (1) exposed to the hazardous environment has a surface temperature that is smaller than or equal to 450°C, preferably smaller than or equal to 300°C, more preferably smaller than or equal to 200°C, furthermore preferably smaller than or equal to 135°C, even more preferably smaller than or equal to 100°C, and most preferably smaller than or equal to 85°C by providing corresponding structural cooling and/or dissipation means.

12. Analyzer instrument (1) according to any one of the preceding claims, **characterized in that** any capacitor of the analyzer instrument (1), storing momentarily releasable energy, has a capacitance that is smaller than or equal to a maximum capacitance (*C*ₘₐₓ) being smaller than or equal to 80 microfarad, preferably being smaller than or equal to 15 microfarad, and more preferably being smaller than or equal to 3 microfarad, and/or **in that** any inductor of the analyzer instrument (1), storing momentarily releasable energy, has a inductance that is smaller than or equal to a maximum inductance (*L*ₘₐₓ) being smaller than or equal to 8 millihenry.

13. Analyzer instrument (1), according to any one of the preceding claims, **characterized in that** the light detection unit (24) is adapted to provide a first signal based on an incident light pulse, **in that** the analyzer instrument (1) comprises an analyzer unit (26) that is adapted to process said first signal and to provide a second signal and a signal-to-noise ratio of said second signal, and **in that** the analyzer instrument (1) is adapted to adjust a light pulse length of a light pulse emitted by the pulsed light source (20) as a function of said signal-to-noise ratio in view of a target signal-to-noise ratio and/or a target accuracy and/or a target time resolution of measurement of a physical parameter of the test medium (4) addressed by the analyzer instrument (1).

14. Analyzer instrument (1) according to claim 13, **characterized in that** it is further adapted to average over the first and/or second signals due to subsequent incident light pulses of the pulsed light source (20), wherein the averaging is preferably processed by the analyzer unit (26) that is adapted to provide an averaged signal including a signal-to-noise ratio of the averaged signal,
and/or **characterized in that** it is adapted to adjust a number of light pulses used to compute the averaged signal as a function of said signal-to-noise ratio of the averaged signal in view of a target signal-to-noise ratio and/or a target accuracy and/or a target time resolution of measurement of a physical parameter of the test medium (4) addressed by the analyzer instrument (1).

15. Analyzer instrument (1) according to any one of the preceding claims, **characterized in that** it is adapted for measuring at least one of the properties of the test medium, (4) preferably selected from the group consisting of: concentration - for example in a gas, a liquid and/or a solid, of particles, molecules, atoms, and/or ions; in particular concentration of oxygen and/or CO₂ -, a pH value, a refractive index, a turbidity, a particle concentration, preferably the concentration of suspended solids, in particular crystals, biological cells or ash and dust as well as combinations thereof,

16. Analyzer instrument (1) according to any one of the preceding claims, **characterized in that** the light management unit (22) comprises at least means for guiding the light, preferably in the form of an element selected from the group of lens systems, splitters, combiners, fibers, wave guides or combinations thereof, wherein said light guiding means are protected from movements that cause movement-induced signal variations, preferably **in that** rigid housings are provided that enclose the light guiding means at least partially, and wherein further preferably the light source (20) is in the vicinity of the detection space (30).

17. Analyzer instrument (1) according to any one of the preceding claims, **characterized in that** it is a local analyzer instrument (1) that is built on a single-platform board assembly (8) or single-platform boards assembly (8) and that is powerable by a mobile power source, and **in that** the analyzer instrument (1) comprises a wireless connection to control cabinets and is free of any physical link for the purpose of energy supply and/or data communication,

18. Method for operating an analyzer instrument (1) according to any one of the preceding claims for measuring at least one property of a test medium (4), **characterized in that** said analyzer instrument (1) is located in a hazardous environment (5) or at least partially, preferably completely, in the test medium (4), wherein the analyzer instrument (1) is operated such that the light source (20) emits light that interacts with the test medium (4), wherein at least a part of said light is scattered, reflected, or transmitted therein and subsequently detected by the light detection unit (24).

19. Method, according to claim 18, **characterized in that** light source (20) emits light pulses and the analyzer instrument (1) averages over measurement results due to single light pulses and/or adjusts a light pulse length in dependence of a predefined measurement requirement.

20. Use of an analyzer instrument (1) according to any one of the claims 1 to 17 for measuring at least one property of test medium (4) in a potentially hazardous environment (5).

## Patentansprüche

1. Analysatorinstrument (1) zum optischen Messen mindestens einer Eigenschaft eines Testmediums (4), insbesondere eines Fluids (4), wobei das Analysatorinstrument (1) Folgendes umfasst:
- mindestens eine Lichtquelle (20) zur Lichtemission,
- optional mindestens eine Lichtmanagementeinheit (22) zum Leiten von von der Lichtquelle (20) emittiertem Licht auf und/oder in und durch einen Detektionsraum (30) in dem Testmedium (4) und/oder optional mindestens eine Lichtmanagementeinheit (22) zum Empfangen von mindestens einem Bruchteil des Lichts, das mit dem Testmedium gewechselwirkt hat,
- mindestens eine Lichtdetektionseinheit (24) zum Detektieren von mindestens einem von dem Testmedium (4) elastisch und/oder ineleastisch gestreuten und/oder reflektierten und/oder transmittierten und/oder gebrochenen Bruchteil des Lichts,
- mindestens eine Leistungsmanagementeinheit (13), und
- mindestens eine Datenmanagementeinheit (28),
wobei das Analysatorinstrument (1) ferner eine Stromversorgungsquelle (10) aufweist und/oder mit dieser über eine Quellenverdrahtung (7) gekoppelt ist, wobei die Leistungsmanagementeinheit (13) Energie von der Stromversorgungsquelle (10) über eine Pufferverdrahtung (18) zu mindestens der Lichtquelle (20) und über eine weitere Verdrahtung (9, 11) zu der mindestens einen Lichtdetektionseinheit (24) und/oder zu der Datenmanagementeinheit (28) verteilt,
wobei die Datenmanagementeinheit (28) eingerichtet ist zum Austauschen von Messdaten über eine Signalverdrahtung (11) mit der Lichtdetektionseinheit (24) und direkt oder indirekt mit einer Empfangseinheit (19), wobei
das Analysatorinstrument (1) eingerichtet ist, in einer potentiell gefährlichen Umgebung (5) betrieben zu werden, wobei zumindest in der Quellenverdrahtung (7) und/oder der weiteren Verdrahtung (9, 11) jeglicher Strom *I* in das Analysatorinstrument (1) auf einen Maximalstrom (*Iₘₐₓ*) begrenzt ist, der kleiner oder gleich 100 Milliampere ist,
**dadurch gekennzeichnet, dass** jegliche Spannung *U* in dem Analysatorinstrument (1) auf eine Maximalspannung (*U*ₘₐₓ) beschränkt ist, die kleiner oder gleich 30 Volt ist, und
das Analysatorinstrument (1) ferner eine zugelassene eigensichere assoziierte Einrichtung (12) umfasst, mittels derer der Maximalstrom (*Iₘₐₓ*) und die Maximalspannung (*U*ₘₐₓ) gewährleistet werden, wobei die Leistungsmanagementeinheit (13) einen Energiepuffer (17) zum Speichern von Energie umfasst oder mit diesem gekoppelt ist, wobei die gespeicherte Energie über die Pufferverdrahtung (18) gepulst an die Lichtquelle (20) freigegeben wird und wobei die Lichtquelle (20) als eine gepulste Lichtquelle (20) betrieben wird.

2. Analysatorinstrument (1) nach Anspruch 1, **dadurch gekennzeichnet, dass** sich die zugelassene eigensichere assoziierte Einrichtung (12) zwischen der Quellenverdrahtung (7) und der Leistungsmanagementeinheit (13) befindet und/oder wobei der Maximalstrom (*Iₘₐₓ*) kleiner oder gleich 25 Milliampere, bevorzugt kleiner oder gleich 20 Milliampere ist und/oder wobei die Maximalspannung (*U*ₘₐₓ) kleiner oder gleich 20 Volt, bevorzugt kleiner oder gleich 15 Volt ist und/oder wobei die maximale Verlustleistung (*P_{diss}*) kleiner oder gleich 20 Milliwatt, bevorzugt kleiner oder gleich 15 Milliwatt ist.

3. Analysatorinstrument (1) nach einem der vorhergehenden Ansprüche, **dadurch gekennzeichnet, dass** das Analysatorinstrument (1) ein mobiles Analysatorinstrument ist.

4. Analysatorinstrument (1) nach einem der vorhergehenden Ansprüche, wobei eine maximale Verlustleistung (*P_{diss}*) in dem Analysatorinstrument (1) kleiner oder gleich 50 Milliwatt, bevorzugt 35 Milliwatt und besonders bevorzugt 25 Milliwatt ist.

5. Analysatorinstrument (1) nach einem der vorhergehenden Ansprüche, wobei die Lichtquelle (20) ein Halbleiterlaser ist, bevorzugt mit einer Speisespannung kleiner oder gleich 5 Volt, bevorzugt kleiner oder gleich 3 Volt und/oder mit einem Versorgungsstrom kleiner oder gleich 200 Milliampere, bevorzugt kleiner oder gleich 50 Milliampere.

6. Analysatorinstrument (1) nach Anspruch 5, wobei der Halbleiterlaser ein oberflächenemittierender Laser mit vertikaler Kavität bzw. ein VCSEL ist.

7. Analysatorinstrument (1) nach einem der vorhergehenden Ansprüche, **dadurch gekennzeichnet, dass** sich die Stromversorgungsquelle (10) nicht in dem Analysatorinstrument (1) befindet und sich außerhalb der gefährlichen Umgebung (5) befindet.

8. Analysatorinstrument (1) nach Anspruch 7, **dadurch gekennzeichnet, dass** sich mit Ausnahme der Stromversorgungsquelle (10) alle Elemente auf einer Einplatinenbaugruppe (8) oder Einplatinenbaugruppen (8), bevorzugt in einem Gehäuse, befinden, wobei die Stromversorgungsquelle (10) ferner über die Quellenverdrahtung (7) mit der Leistungsmanagementeinheit (13) verbunden ist, und die Quellenverdrahtung (7) eingerichtet ist zum Austauschen von Daten und Energie, wobei die Quellenverdrahtung (7) bevorzugt eigensicher ist, beispielweise durch Isolierung.

9. Analysatorinstrument (1) nach einem der vorhergehenden Ansprüche, **dadurch gekennzeichnet, dass** die Quellenverdrahtung (7) und/oder die weitere Verdrahtung (9, 11) und/oder die Pufferverdrahtung (18) eine 2-Drahtverbindung ist oder sind, eingerichtet zur Übertragung von Daten und Energie, bevorzugt mit einer Maximalübertragungsspannung von 24 Volt und einem Maximalstrom von 50 Milliampere, besonders bevorzugt mit einer Maximalübertragungsspannung von 15 Volt und einem Maximalstrom von 25 Milliampere.

10. Analysatorinstrument (1) nach einem der vorhergehenden Ansprüche, wobei die Pufferverdrahtung (18) und damit verbundene Komponenten isoliert sind, so dass Anforderungen der Eigensicherheit erfüllt werden, trotz höherer Werte als die Maximalspannung (*U*ₘₐₓ) und/oder als der Maximalstrom (*Iₘₐₓ*).

11. Analysatorinstrument (1) nach einem der vorhergehenden Ansprüche, **dadurch gekennzeichnet, dass** es derart gebaut ist, dass jegliche der gefährlichen Umgebung ausgesetzte Oberfläche des Analysatorinstruments (1) eine Oberflächentemperatur aufweist, die kleiner oder gleich 450 °C, bevorzugt kleiner oder gleich 300 °C, besonders bevorzugt kleiner oder gleich 200 °C, darüber hinaus bevorzugt kleiner oder gleich 135 °C, noch mehr besonders bevorzugt kleiner oder gleich 100 °C und ganz besonders bevorzugt kleiner oder gleich 85 °C ist, indem entsprechende strukturelle Kühl- und/oder Ableitmittel vorgesehen sind.

12. Analysatorinstrument (1) nach einem der vorhergehenden Ansprüche, **dadurch gekennzeichnet, dass** jeglicher Kondensator des Analysatorinstruments (1), der augenblicklich freigebbare Energie speichert, eine Kapazität aufweist, die kleiner oder gleich einer Maximalkapazität (*Cₘₐₓ*) ist, die kleiner oder gleich 80 Mikrofarad, bevorzugt kleiner oder gleich 15 Mikrofarad und besonders bevorzugt kleiner oder gleich 3 Mikrofarad ist, und/oder dass jegliches induktive Element des Analysatorinstruments (1), das augenblicklich freigebbare Energie speichert, eine Induktivität aufweist, die kleiner oder gleich einer maximalen Induktivität (*Lₘₐₓ*) ist, die kleiner oder gleich 8 Millihenry ist.

13. Analysatorinstrument (1) nach einem der vorhergehenden Ansprüche, **dadurch gekennzeichnet, dass** die Lichtdetektionseinheit (24) eingerichtet ist zum Liefern eines auf einem einfallenden Lichtpuls basierenden ersten Signals, dass das Analysatorinstrument (1) eine Analysatoreinheit (26) umfasst, die eingerichtet ist zum Verarbeiten des ersten Signals und zum Liefern eines zweiten Signals und eines Signal-Rausch-Verhältnisses des zweiten Signals, und dass das Analysatorinstrument (1) eingerichtet ist zum Einstellen einer Lichtpulslänge eines durch die gepulste Lichtquelle (20) emittierten Lichtpulses als eine Funktion des Signal-Rausch-Verhältnisses im Hinblick auf ein Ziel-Signal-RauschVerhältnis und/oder eine Zielgenauigkeit und/oder eine Zielzeitauflösung einer Messung eines durch das Analysatorinstrument (1) angesprochenen physikalischen Parameters des Testmediums (4).

14. Analysatorinstrument (1) nach Anspruch 13, **dadurch gekennzeichnet, dass** es ferner eingerichtet ist zum Mitteln über das erste und/oder das zweite Signal aufgrund von aufeinanderfolgenden einfallenden Lichtpulsen der gepulsten Lichtquelle (20), wobei das Mitteln bevorzugt durch die Analysatoreinheit (26) verarbeitet wird, die eingerichtet ist zum Liefern eines gemittelten Signals, das ein Signal-RauschVerhältnis des gemittelten Signals aufweist,
und/oder **dadurch gekennzeichnet, dass** es eingerichtet ist zum Einstellen einer Anzahl von Lichtpulsen, die verwendet wird zum Berechnen des gemittelten Signals als eine Funktion des Signal-Rausch-Verhältnisses des gemittelten Signals im Hinblick auf ein Ziel-Signal-Rausch-Verhältnis und/oder eine Zielgenauigkeit und/oder eine Zielzeitauflösung einer Messung eines durch das Analysatorinstrument (1) angesprochenen physikalischen Parameters des Testmediums (4).

15. Analysatorinstrument (1) nach einem der vorhergehenden Ansprüche, **dadurch gekennzeichnet, dass** es eingerichtet ist zum Messen von mindestens einer der Eigenschaften des Testmediums (4), bevorzugt ausgewählt aus der aus den Folgenden bestehenden Gruppe: Konzentration - beispielsweise in einem Gas, einer Flüssigkeit und/oder einem Festkörper, von Partikeln, Molekülen, Atomen und/oder Ionen; insbesondere Konzentration von Sauerstoff und/oder CO₂ -, ein pH-Wert, ein Brechungsindex, eine Trübung, eine Partikelkonzentration, bevorzugt die Konzentration von suspendierten Festkörpern, insbesondere Kristallen, biologischen Zellen oder Asche und Staub sowie Kombinationen davon.

16. Analysatorinstrument (1) nach einem der vorhergehenden Ansprüche, **dadurch gekennzeichnet, dass** die Lichtmanagementeinheit (22) zumindest Mittel zum Leiten des Lichts umfasst, bevorzugt in der Form eines aus der Gruppe von Linsensystemen, Teilern, Kombinierern, Fasern, Wellenleitern ausgewählten Elements oder Kombinationen davon, wobei die Lichtleitmittel vor Bewegungen geschützt sind, die bewegungsinduzierte Signalschwankungen verursachen, bevorzugt dadurch, dass starre Gehäuse vorgesehen sind, die die Lichtleitmittel zumindest teilweise umschließen, und wobei sich die Lichtquelle (20) ferner in der Nähe des Detektionsraums (30) befindet.

17. Analysatorinstrument (1) nach einem der vorhergehenden Ansprüche, **dadurch gekennzeichnet, dass** es ein lokales Analysatorinstrument (1) ist, das auf einer Einplatinenbaugruppe (8) oder Einplatinenbaugruppen (8) aufbaut und durch eine mobile Stromversorgungsquelle mit Strom versorgbar ist, und dass das Analysatorinstrument (1) eine drahtlose Verbindung zu Schaltschränken umfasst und frei von jeglichen physischen Verbindungsstrecken für den Zweck von Energieversorgung und/oder Datenkommunikation ist.

18. Verfahren zum Betreiben eines Analysatorinstruments (1) nach einem der vorhergehenden Ansprüche zum Messen mindestens einer Eigenschaft eines Testmediums (4), **dadurch gekennzeichnet, dass** sich das Analysatorinstrument (1) in einer gefährlichen Umgebung (5) oder zumindest teilweise, bevorzugt vollständig, in dem Testmedium (4) befindet, wobei das Analysatorinstrument (1) derart betrieben wird, dass die Lichtquelle (20) Licht emittiert, das mit dem Testmedium (4) wechselwirkt, wobei zumindest ein Teil des Lichts darin gestreut, reflektiert oder transmittiert und danach durch die Lichtdetektionseinheit (24) detektiert wird.

19. Verfahren nach Anspruch 18, **dadurch gekennzeichnet, dass** die Lichtquelle (20) Lichtpulse emittiert und das Analysatorinstrument (1) über Messergebnisse aufgrund einzelner Lichtpulse mittelt und/oder eine Lichtpulslänge in Abhängigkeit von einer vordefinierten Messanforderung einstellt.

20. Verwenden eines Analysatorinstruments (1) nach einem der Ansprüche 1 bis 17 zum Messen mindestens einer Eigenschaft eines Testmediums (4) in einer potentiell gefährlichen Umgebung (5).

## Revendications

1. Instrument d'analyseur (1) pour mesurer de façon optique au moins une propriété d'un milieu de test (4), en particulier un fluide (4), ledit instrument d'analyseur (1) comprenant
- au moins une source de lumière (20) pour l'émission d'une lumière,
- facultativement au moins une unité de gestion de lumière (22) pour guider une lumière émise par ladite source de lumière (20) sur et/ou dans et à travers un espace de détection (30) dans ledit milieu de test (4), et/ou, facultativement, au moins une unité de gestion de lumière (22) pour recevoir au moins une fraction de la lumière qui a interagi avec le milieu de test,
- au moins une unité de détection de lumière (24) pour détecter au moins une fraction de ladite lumière diffusée et/ou réfléchie et/ou transmise et/ou réfractée de manière élastique et/ou de manière non élastique par le milieu de test (4),
- au moins une unité de gestion de puissance (13), et
- au moins une unité de gestion de données (28),
dans lequel ledit instrument d'analyseur (1) comprend en outre une source d'alimentation (10) et/ou est couplé à cette dernière par le biais d'un câblage de source (7),
dans lequel ladite unité de gestion de puissance (13) distribue de l'énergie à partir de la source d'alimentation (10) par le biais d'un câblage tampon (18) à au moins ladite source de lumière (20), et, par le biais d'un câblage supplémentaire (9, 11), à au moins ladite unité de détection de lumière (24) et/ou à ladite unité de gestion de données (28),
dans lequel ladite unité de gestion de données (28) est conçue pour échanger des données de mesure par le biais d'un câblage de signal (11) avec ladite unité de détection de lumière (24) et directement ou indirectement avec une unité de réception (19), dans lequel ledit instrument d'analyseur (1) est conçu pour être mis en fonctionnement dans un environnement potentiellement dangereux (5) dans lequel au moins dans le câblage de source (7) et/ou dans ledit câblage supplémentaire (9, 11), un courant quelconque *I* dans l'instrument d'analyseur (1) est limité à un courant maximal (*I*ₘₐₓ) inférieur ou égal à 100 milliampères, **caractérisé en ce que**
une tension quelconque *U* dans l'instrument d'analyseur (1) est limitée à une tension maximale (*U*ₘₐₓ) inférieure ou égale à 30 volts,
et
ledit instrument d'analyseur (1) comprend en outre un appareil associé approuvé intrinsèquement sécurisé (12), au moyen duquel le courant maximal (*Iₘₐₓ*) et la tension maximale (*U*ₘₐₓ) sont assurés, dans lequel l'unité de gestion de puissance (13) comprend un tampon d'énergie (17), ou est couplée à ce dernier, pour stocker de l'énergie, dans lequel l'énergie stockée est libérée de manière pulsée vers la source de lumière (20) par le biais du câblage tampon (18) et dans lequel la source de lumière (20) est exploitée sous la forme d'une source de lumière pulsée (20).

2. Instrument d'analyseur (1) selon la revendication 1, **caractérisé en ce que** l'appareil associé approuvé intrinsèquement sécurisé (12) est situé entre le câblage de source (7) et l'unité de gestion de puissance (13) et/ou dans lequel le courant maximal (*I*ₘₐₓ) est inférieur ou égal à 25 milliampères, de préférence inférieur ou égal à 20 milliampères, et/ou dans lequel la tension maximale (*U*ₘₐₓ) est inférieure ou égale à 20 volts, de préférence inférieure ou égale à 15 volts, et/ou dans lequel la puissance dissipée maximale (P_{diss}) est inférieure ou égale à 20 milliwatts, de préférence inférieure ou égale à 15 milliwatts.

3. Instrument d'analyseur (1) selon l'une quelconque des revendications précédentes, **caractérisé en ce que** l'instrument d'analyseur (1) est un instrument d'analyseur mobile.

4. Instrument d'analyseur (1) selon l'une quelconque des revendications précédentes, dans lequel la puissance dissipée maximale (P_{diss}) dans l'instrument d'analyseur (1) est inférieure ou égale à 50 milliwatts, de préférence à 35 milliwatts et, plus préférentiellement à 25 milliwatts.

5. Instrument d'analyseur (1) selon l'une quelconque des revendications précédentes, dans lequel la source de lumière (20) est un laser à semi-conducteur, de préférence ayant une tension d'alimentation inférieure ou égale à 5 volts, de préférence inférieure ou égale à 3 volts, et/ou ayant un courant d'alimentation inférieur ou égal à 200 milliampères, de préférence inférieur ou égal à 50 milliampères.

6. Instrument d'analyseur (1) selon la revendication 5, **caractérisé en ce que** le laser à semi-conducteur est un laser à cavité verticale émettant par la surface.

7. Instrument d'analyseur (1) selon l'une quelconque des revendications précédentes, **caractérisé en ce que** la source d'alimentation (10) n'est pas située dans l'instrument d'analyseur (1) et est située à l'extérieur de l'environnement dangereux (5).

8. Instrument d'analyseur (1) selon la revendication 7, **caractérisé en ce que** tous les éléments, à l'exception de la source d'alimentation (10), sont situés sur un ensemble plateau d'une seule plate-forme (8) ou un ensemble de plateaux d'une seule plate-forme (8), de préférence dans un boîtier, dans lequel, en outre, la source d'alimentation (10) est raccordée à l'unité de gestion de puissance (13) par le biais du câblage de source (7) et le câblage de source (7) est conçu pour échanger des données et de l'énergie, dans lequel, de préférence, le câblage de source (7) est intrinsèquement sécurisé, par exemple au moyen d'un isolant.

9. Instrument d'analyseur (1) selon l'une quelconque des revendications précédentes, **caractérisé en ce que** le câblage de source (7) et/ou le câblage supplémentaire (9, 11) et/ou le câblage tampon (18) est ou sont une connexion à deux fils conçu pour la transmission de données et de l'énergie, de préférence avec une tension transmise maximale de 24 volts et un courant maximal de 50 milliampères, de manière plus préférée avec une tension transmise maximale de 15 volts et un courant maximal de 25 milliampères.

10. Instrument d'analyseur (1) selon l'une quelconque des revendications précédentes, dans lequel le câblage tampon (18) et, raccordés à ce dernier, des composants sont isolés de telle sorte que des exigences de sécurité intrinsèque soient remplies malgré des valeurs supérieures à ladite tension maximale (*U*ₘₐₓ) et/ou au dit courant maximal (*I*ₘₐₓ).

11. Instrument d'analyseur (1) selon l'une quelconque des revendications précédentes, **caractérisé en ce qu'**il est construit de telle sorte que n'importe quelle surface de l'instrument d'analyseur (1) exposée à l'environnement dangereux présente une température de surface qui est inférieure ou égale à 450 °C, de préférence inférieure ou égale à 300 °C, plus préférentiellement, inférieure ou égale à 200 °C, en outre de préférence inférieure ou égale à 135 °C, plus préférentiellement encore inférieure ou égale à 100 °C et mieux encore inférieure ou égale à 85 °C en fournissant des moyens de refroidissement et/ou de dissipation structuraux correspondants.

12. Instrument d'analyseur (1) selon l'une quelconque des revendications précédentes, **caractérisé en ce que** n'importe quel condensateur de l'instrument d'analyseur (1), stockant momentanément de l'énergie libérable, présente une capacité qui est inférieure ou égale à une capacité maximale (*C*ₘₐₓ) qui est inférieure ou égale à 80 microfarads, de préférence qui est inférieure ou égale à 15 microfarads et mieux encore qui est inférieure ou égale à 3 microfarads et/ou **en ce que** n'importe quelle bobine d'induction de l'instrument d'analyseur (1), stockant momentanément de l'énergie libérable, présente une inductance qui est inférieure ou égale à une inductance maximale (*L*ₘₐₓ) qui est inférieure ou égale à 8 millihenrys.

13. Instrument d'analyseur (1) selon l'une quelconque des revendications précédentes, **caractérisé en ce que** l'unité de détection de lumière (24) est conçue pour fournir un premier signal en se basant sur une impulsion de lumière incidente, **en ce que** l'instrument d'analyseur (1) comprend une unité d'analyseur (26) qui est conçue pour traiter ledit premier signal et pour fournir un second signal et un rapport signal sur bruit dudit second signal, et **en ce que** l'instrument d'analyseur (1) est conçu pour ajuster une longueur d'impulsion de lumière d'une impulsion de lumière émise par la source de lumière pulsée (20) en fonction dudit rapport signal sur bruit étant donné un rapport signal sur bruit cible et/ou une précision cible et/ou une résolution temporelle cible d'une mesure d'un paramètre physique du milieu de test (4) adressé par l'instrument d'analyseur (1).

14. Instrument d'analyseur (1) selon la revendication 13, **caractérisé en ce qu'**il est en outre conçu pour faire la moyenne des premier et/ou second signaux grâce à des impulsions de lumière incidente ultérieures de la source de lumière pulsée (20), dans lequel le calcul de moyenne est de préférence traité par l'unité d'analyseur (26) qui est conçue pour fournir un signal moyenné comprenant un rapport signal sur bruit du signal moyenné,
et/ou **caractérisé en ce qu'**il est conçu pour ajuster un nombre d'impulsions de lumière utilisées pour comparer le signal moyenné en fonction dudit rapport signal sur bruit du signal moyenné étant donné un rapport signal sur bruit cible et/ou une précision cible et/ou une résolution temporelle cible d'une mesure d'un paramètre physique du milieu de test (4) adressé par l'instrument d'analyseur (1).

15. Instrument d'analyseur (1) selon l'une quelconque des revendications précédentes, **caractérisé en ce qu'**il est conçu pour mesurer au moins l'une des propriétés du milieu de test (4) de préférence sélectionnées dans le groupe constitué par : la concentration - par exemple dans un gaz, un liquide et/ou un solide, de particules, de molécules, d'atomes et/ou d'ions ; en particulier la concentration en oxygène et/ou en CO₂ -, une valeur de pH, un indice de réfraction, une turbidité, une concentration en particules, de préférence la concentration des solides suspendus, en particulier des cristaux, des cellules biologiques ou de la cendre et de la poussière ainsi que des combinaisons de ces derniers.

16. Instrument d'analyseur (1) selon l'une quelconque des revendications précédentes, **caractérisé en ce que** l'unité de gestion de lumière (22) comprend au moins des moyens pour guider la lumière, de préférence sous la forme d'un élément sélectionné dans le groupe constitué par des systèmes de lentille, des diviseurs, des combinateurs, des fibres, des guides d'ondes ou des combinaisons de ces derniers, dans lequel lesdits moyens de guidage de lumière sont protégés des mouvements qui provoque des variations de signal induites par un mouvement, de préférence **en ce que** des boîtiers rigides sont fournis qui renferment les moyens de guidage de lumière au moins partiellement, et dans lequel en outre, de préférence la source de lumière (20) se trouve à proximité de l'espace de détection (30) .

17. Instrument d'analyseur (1) selon l'une quelconque des revendications précédentes, **caractérisé en ce qu'**il s'agit d'un instrument d'analyseur local (1) qui est construit sur un ensemble plateau d'une seule plate-forme (8) ou d'un ensemble de plateaux d'une seule plate-forme (8) et qui peut être alimenté par une source d'alimentation mobile, et **en ce que** l'instrument d'analyseur (1) comprend une connexion sans fil avec des armoires de commande et est dépourvu de toute liaison physique à des fins d'alimentation en énergie et/ou de communication de données.

18. Procédé pour faire fonctionner un instrument d'analyseur (1) selon l'une quelconque des revendications précédentes pour mesurer au moins une propriété d'un milieu de test (4), **caractérisé en ce que** ledit instrument d'analyseur (1) est situé dans un environnement dangereux (5) ou au moins partiellement, de préférence complètement, dans le milieu de test (4), dans lequel l'instrument d'analyseur (1) est mis en fonctionnement de telle sorte que la source de lumière (20) émette de la lumière qui interagit avec le milieu de test (4), dans lequel au moins une partie de ladite lumière est diffusée, réfléchie ou transmise dans ce dernier et, par la suite, détectée par l'unité de détection de lumière (24).

19. Procédé selon la revendication 18, **caractérisé en ce que** la source de lumière (20) émet des impulsions de lumière et l'instrument d'analyseur (1) fait la moyenne de résultats de mesure grâce à de simples impulsions de lumière et/ou ajuste une longueur d'impulsion de lumière en fonction d'une exigence de mesure prédéfinie.

20. Utilisation d'un instrument d'analyseur (1) selon l'une quelconque des revendications 1 à 17 pour mesurer au moins une propriété d'un milieu de test (4) dans un environnement potentiellement dangereux (5).
